# FASCICULE DE BREVET EUROPEEN

(11) **EP 0 857 468 B1**
(45) Date de publication et mention de la délivrance du brevet: **29.06.2005**
(21) Numéro de dépôt: 98200269.3
(22) Date de dépôt: 26.09.1994
(51) Int. Cl.: A61C 13/06

(54) **Machine de fabrication d'une prothese dentaire à coque de support composite.**
Vorrichtung zum Herstellen einer dentalen Prothese mit einer aus Kompositmaterial gebauten schalenähnlichen Stütze
Machine for the manufacturing of a dental prosthesis using a composite support shell

(30) Priorité: 24.09.1993 FR 9311414
(43) Date de publication de la demande: 12.08.1998
(62) Demande divisionnaire de: 94928916.9
(73) Titulaire: Billet, Gilles, F-38500 Voiron (FR); Clunet-Coste, Bruno, F-38960 Saint-Etienne-de-Crossey (FR); Maneuf, Bernard, 38500 Voiron (FR)
(72) Inventeur: Billet, Gilles, F-38500 Voiron (FR); Clunet-Coste, Bruno, F-38960 Saint-Etienne-de-Crossey (FR); Maneuf, Bernard, 38500 Voiron (FR)
(74) Mandataire: Hecké, Gérard

(56) Documents cités:
- FR-A- 2 090 395

## Description

L'invention concerne une machine de fabrication d'une prothèse dentaire à coque de support composite comprenant une enceinte hermétique, une platine de réception d'un modèle de formage dans l'enceinte, une membrane souple imperméable à un fluide, séparant l'enceinte de deux chambres, des moyens de réticulation des pièces placées sur le modèle de formage, et des moyens pour créer une pression du fluide dans la chambre contenant le modèle de formage moins importante que dans l'autre chambre.

Une prothèse dentaire concerne généralement une couronne, un bridge, une prothèse implantée, une dent artificielle ou un dentier amovible, destinée à reconstituer la forme et les caractéristiques d'au moins une dent à partir d'un moignon naturel (couronne posée en bouche sur la dent d'origine), implantaire (couronne placée sur un implant en bouche) ou modèle de laboratoire représentatif des tissus mous (dentier).

Les prothèses dentaires connues sont réalisées sous forme d'une coque en une seule pièce en métal ou en matériau composite (WO-A-8904640) ou en résine, ou encore avec une coque ou une armature généralement métallique recouverte de céramique ou de résine. Le document FR-A-2588181 préconise l'utilisation de matériau composite, pour réaliser des tenons pour inlays de reconstitution, des cupules, des bridges ou des implants.

Selon le document US-A-5062799, un revêtement externe de finition recouvre la coque de support, laquelle est composée d'un matériau composite comprenant une armature de fibres noyées dans une matrice.

Le document FR-A-2090395 concerne un dispositif pour la fabrication de prothèses dentaires, ayant une enceinte hermétique, une platine de réception d'un modèle de formage dans l'enceinte, une membrane souple imperméable à un fluide séparant l'enceinte des deux chambres, et des moyens de réticulation des pièces placées sur le modèle de formage.

Dans l'art antérieur, on a toujours cherché à réaliser ces prothèses, et plus particulièrement leurs éléments constitutifs internes (coques, armatures métalliques, tenons, cupules...) dans des matériaux aussi rigides que possible. Ainsi le document WO-A-8904640 préconise de réaliser les prothèses dentaires en matériau composite une plus grande rigidité et résistance, et plus généralement des caractéristiques mécaniques plus grandes que celles des polymères généralement utilisées. Plus particulièrement, ce document préconise d'utiliser un matériau composite dont le module d'élasticité est supérieur à 3,45 GPa. Le document FR-A-2588181 préconise d'utiliser des matériaux composites renforcés par des fibres de résistance élevée, notamment des fibres de carbone avec une matrice plus particulièrement en résine époxy ou polyester, afin de procurer à la prothèse une rigidité élevée. En effet, les qualités essentielles bien connues d'une dent ou d'une prothèse dentaire sont d'une part de ne pas casser sous l'effet des chocs, d'autre part de ne pas s'user trop vite. Or, pour réaliser ces qualités, on a cherché jusqu'à maintenant essentiellement à renforcer la rigidité des prothèses.

Néanmoins, les prothèses entièrement métalliques sont peu esthétiques, les prothèses entièrement en résine s'avèrent fragile à l'usage, celles réalisées par une coque ou armature métallique revêtue de céramique sont extrêmement onéreuses, longues et délicates à fabriquer, et celles réalisées à partir d'une coque ou armature métallique revêtue d'une résine sont également longues à fabriquer, et sujettes à des détérioration à l'usage compte tenu de la mauvaise adhérence de la résine sur les armatures ou coques en métal, et de la concentration des contraintes aux interfaces de matériaux ayant des caractéristiques mécaniques très différentes (métal/résine).

Or les inventeurs ont déterminé que pour avoir des qualités mécaniques satisfaisantes, une prothèse dentaire doit le plus possible imiter ou reproduire la dent naturelle qui comprend une cavité pulpaire entourée de dentine et d'un revêtement en émail. Ainsi, il est important que la prothèse soit constituée de deux parties distinctes dont les caractéristiques mécaniques sont différentes, à savoir un revêtement dur et résistant à l'abrasion, et une coque ou armature de support dont les caractéristiques sont déterminées pour que le revêtement dur ne casse pas, en étant associé rigidement au moignon tout en reproduisant les caractéristiques mécaniques en dynamique et statique de la dent naturelle.

L'objet de l'invention consiste à réaliser une machine pour obtenir une prothèse dentaire non métallique qui reproduit les caractéristiques mécaniques de la dent naturelle, et qui est compatible avec l'environnement biologique de la dent.

La machine selon l'invention est caractérisée en ce que les moyens de réticulation sont des moyens de photo-réticulation comprenant au moins une source de lumière disposée dans la chambre contenant le modèle de formage, et en ce que la membrane est en matériau translucide.

Selon une caractéristique de l'invention, les moyens de réticulation comprennent au

moins un conduit de lumière aboutissant sur la platine de réception pour éclairer de l'intérieur le modèle de formage réalisé en matériau translucide.

D'autres avantages et caractéristiques de l'invention apparaîtront à la lecture de la description suivante qui se réfère aux figures annexées dans lesquelles:
- la figure 1 est une vue en coupe verticale d'une dent équipée d'une prothèse dentaire selon l'invention;
- la figure 2 est une vue en élévation d'une pièce de tissu préimprégné selon l'invention au cours d'une étape du procédé de fabrication;
- la figure 3 est une vue similaire à la figure 2 illustrant une étape ultérieure du procédé de fabrication ;
- la figure 4 est une vue schématique en section d'une machine selon l'invention;
- la figure 5 est une vue en perspective illustrant les différents composants d'une pièce de tissu préimprégné .

En référence aux figures, une prothèse dentaire est posée sur un moignon naturel 1 de la dentine taillée en bouche pour percevoir la prothèse. Celle-ci est constituée d'une coque de support 2 recouvrant le moignon naturel 1 et d'un revêtement externe de finition 3 recouvrant la coque de support 2. La coque de support 2 est composée d'un matériau composite comprenant une armature de fibres 4 noyée dans une matrice organique 5. Le revêtement 3 est composé d'au moins une couche de résine organique dont au moins un composant essentiel est de même nature qu'au moins un composant essentiel de la matrice organique 5, de sorte que cette résine organique adhère par interaction chimique sur le matériau composite de la coque de support 2.

La résine organique du revêtement et la matrice de la coque de support ont donc au moins un composant commun.

Toute sorte de résine organique constitutive du revêtement et de matériaux composites constitutifs de la coque de support 2 peut être utilisée dès lors que la prothèse résultante a des caractéristiques mécaniques d'esthétique, et de biocompatibilité satisfaisantes. Néanmoins , les résines organiques utilisées pour le revêtement de finition dentaire sont généralement des résines constituées d'une base organique et de charges ou microcharges. La matrice organique constitutive de la coque de support 2 est également une résine organique constituée de la même base que celle du revêtement 3, et de charges ou de microcharges appropriées pour faciliter sa mise en oeuvre et lui conférer des caractéristiques mécaniques appropriées.

La matrice de la coque de support 2 comporte au moins un composant essentiel choisi dans le groupe constitué des résines aromatiques à base de diméthacrylate, des résines aromatiques à base époxy et des résines polyméthacrylates. La matrice 5 peut également comporter des résines méthacrylates uréthannes. Parmi les résines aromatiques diméthacrylates, on peut utiliser notamment les dérivés du BIS phénol A, tel que le bisphénol A-glycidyl-diméthacrylate (BIS-GMA), et/ou d'autres monomères tels qu'un uréthane- diméthacrylate (UDMA), et / ou un triéthylène-glycol- diméthacrylate (TEDMA).

Selon l'invention, on peut utiliser une résine à base de BIS-GAM modifiée par copolymérisation avec des composés de plus bas poids moléculaire, notamment à titre non limitatif des bisphénol-glycidyl- diméthacrylates (BIS-MA), des bisphénol -éthyl méthacrylates (BIS-EMA), des bisphénol -propyl- méthacrylates (BIS-PMA), des éthylènes-glycol-diméthacrylates (EGDMA), des diéthylène-glycol-diméthacrylates (DEGDMA), des triéthylène-glycol-diméthacrylates (TEGMA), des triéthylène-glycol-méthacrylates (TEGMA), des méthyl-méthacrylates (MMA), et des polyuréthane-fluor-méthacrylates (PFUMA).

La matrice organique 5 composant la coque de support 2 comporte également des charges et notamment des composants photo-amorceurs, tels que les dicétones, notamment la diacétyle et/ou des quinones tels que la camphoroquinone et l'acénaphtène quinone sensibles à la lumière visible ainsi que des accélérateurs, notamment des amines. Ainsi, la matrice organique peut être réticulée par éclairage en lumière visible.

Par ailleurs, le matériau composite de la coque de support 2 comporte une armature de fibres 4 composée d'au moins une couche de tissu maillé de fibres. Le matériau composite de la coque de support 2 est un stratifié composé d'une pluralité de couches de tissu maillé de fibres, notamment de fibres de verre, de céramique ou de silice. On peut ainsi utiliser de deux à dix couches de tissu de fibres de verre E ou S ayant chacune une épaisseur de 0,1 mm.

Le revêtement 3 externe de finition peut être constitué d'une résine chargée cosmétique, notamment du type constitué de dérivés du BIS-phénol A tel que le BIS-GMA, chargé de telle façon qu'il ait une autre rigidité, une grande résistance à l'abrasion, ainsi qu'une teinte proche de la dent naturelle. De telles résines cosmétiques chargées sont connues en elles-mêmes.

La première couche de résine organique du revêtement 3 au contact de la coque de support 2 est constituée par une résine formée du (des) composant(s) commun(s) du revêtement 3 de la matrice organique 5, c'est à dire d'une résine non chargée. En particulier, la première couche est constituée uniquement de résine méthacrylate ou diméthacrylate non chargée. Cette première couche de résine non chargée pénètre donc dans le matériau composant réalisant la coque de support 2 d'un côté, et dans la première couche de résine chargée du revêtement 3 de l'autre côté. On obtient ainsi un mélange homogène, et une bonne continuité due à la solution entre la coque de support 2 et le revêtement 3.

La dent munie d'une prothèse dentaire comporte donc, de l'extérieur vers l'intérieur, un revêtement 3 externe de finition cosmétique ayant une épaisseur comprise entre 0 et 2 mm, une coque de support 2 en matériau composite dont l'épaisseur peut varier entre 0,1 et 2 mm, une couche de ciment de scellement 31 dont l'épaisseur varie également entre 5 et 35 µm, et le moignon 1 en dentine naturelle ou en dentine reconstituée de matériau composite ou métallique.

Le matériau composite de la coque de support 2 peut être constitué de fibres autres que le verre, par exemple des fibres d'aramide (notamment connues sous la marque déposée KEVLAR), de carbone, de bore, de silice ou de céramique,... La matrice organique peut également être une matrice réticulable non pas par la lumière, mais par un procédé thermique ou chimique ou autre. L'orientation, les dimensions, et le maillage des fibres constituant l'armature 4 sont adaptés en fonction des caractéristiques mécaniques susmentionnées désirées selon l'application de la prothèse.

La pièce 7 de tissu a une forme générale de disque d'un diamètre de 10 à 100 mm emprisonné entre deux films protecteurs 8, et/ou entre deux membranes 9, 10 élastiques.

La pièce de tissu préimprégné 7 est placée sur un modèle de formage 11 qui peut être soit une reproduction de moignon naturel, soit un moignon implantable, soit un modèle de prothèse mobile (par exemple dans le cas de la fabrication d'un dentier). On forme ensuite la pièce 7 de tissu préimprégné sur le modèle de formage 11 par compression en plaquant cette pièce 7 de tissu sur le modèle de formage 11. On réalise ensuite la réticulation de la matrice organique 5 de la pièce 7 de tissu préimprégné pour obtenir la coque de support 2 rigide. Et on réalise des couches successives de résine organique réticulée sur la coque de support 2 pour former un revêtement 3 externe de finition .

Pour former la pièce 7 de tissu préimprégné sur le modèle de formage 11, et la plaquer contre ce modèle de formage 11, on applique une membrane souple 9 imperméable à un fluide, notamment à l'air par pression du fluide différentielle sur la pièce 7 qui vient se plaquer sur le modèle de formage 11. On peut préformer la pièce 7 avec sa partie centrale au moins sensiblement conique avant de la placer sur un modèle 11 en forme de moignon. De la sorte, la partie centrale tronconique repose sur le moignon 11, sans nécessiter de moyens de maintien spécifiques. En variante on peut placer la pièce 7 de tissu préimprégné, et la former sur le modèle de formage 11 en l'emprisonnant entre deux membranes souples 9, 10 imperméables à un fluide, et en appliquant l'ensemble ainsi formé par pression du fluide différentielle de façon à le plaquer sur le modèle de formage 11.

La surface externe 12 de la coque de support 2 est soumise après sa réticulation à une abrasion ou une érosion avant la pose de la première couche de résine organique destinée à former le revêtement 3 pour faire apparaître les fibres de l'armature 4 de tissu en surface.

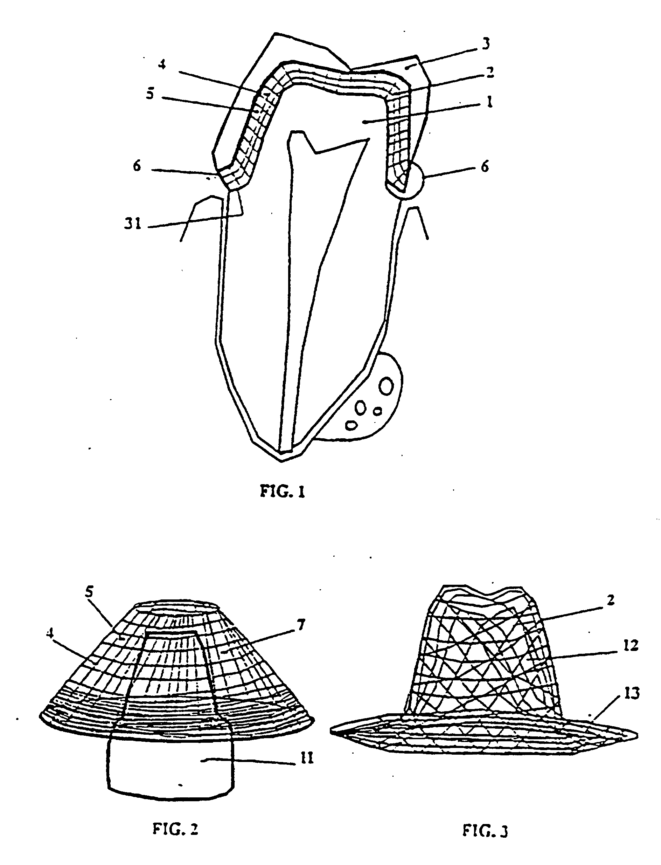

La figure 2 représente la pièce 7 du tissu préimprégné, laquelle est préformée selon un cône posé sur le modèle de formage 11, qui est un moignon artificiel reproduisant un moignon naturel. La figure 3 représente le résultat obtenu après avoir formé la pièce 7 de tissu imprégné sur le moignon 11 par pression différentielle. A partir de l'étape de la figure 3, on découpe la collerette en surplus 13 de la coque de support 2, ce qui doit être effectué impérativement avant extraction du moignon. On extrait ensuite la coque de support 2 rigide ainsi formée, soit en la séparant simplement du moignon 11 si un film isolant a été interposé entre le moignon 11 et la pièce 7 de tissu imprégné, soit par dissolution chimique du matériau composant le moignon 11. On réalise ensuite une abrasion de la surface 12 externe de la coque support 2, et on réalise des couches successives photo-polymérisées de résine cosmétique pour réaliser le revêtement 3 comme indiqué ci-dessus.

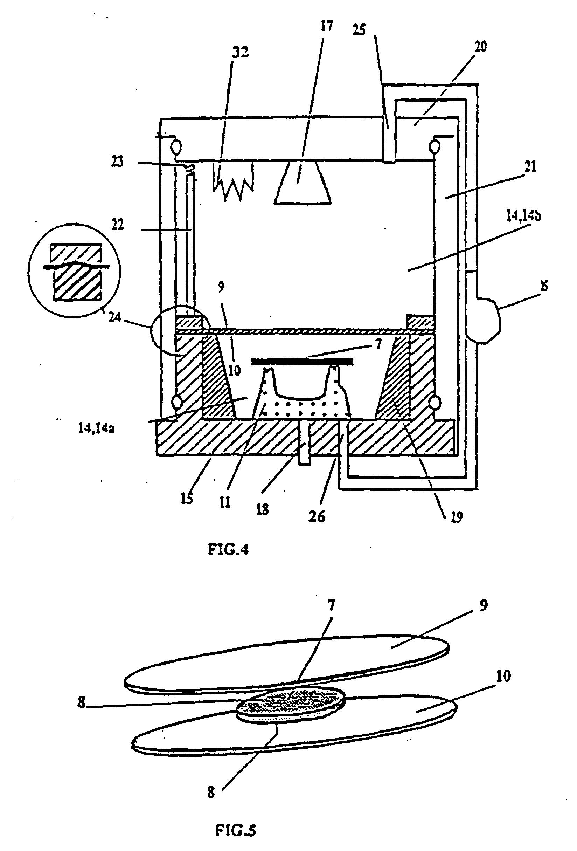

En référence à la figure 4, une machine de fabrication de la prothèse dentaire comporte une enceinte 14 hermétique, une platine 15 de réception d'un modèle de formage 11 dans l'enceinte 14, une membrane souple imperméable à un fluide 9, notamment à l'air, séparant l'enceinte 14 en deux chambres 14a, 14b, des moyens 16, 25 26 pour créer une pression de fluide dans la chambre 14a contenant le modèle de formage 11 moins importante que dans l'autre chambre 14b, et des moyens 17, 18, 19, 32 de réticulation des pièces 7 placées sur le modèle de formage 11 dans la chambre 14a.

Selon l'invention, les moyens 17, 18, 19 de réticulation sont des moyens de photo-réticulation comprenant au moins une source de lumière 17 disposée dans la chambre 14b opposée à celle de la chambre 14a contenant le modèle de formage 11. La membrane 9 souple séparatrice est alors translucide ou transparente, c'est à dire qu'elle laisse passer la lumière. Les moyens 17, 18, 19 de réticulation comprennent au moins un conduit de lumière 18 aboutissant à la platine 15 de réception pour éclairer de l'intérieur le modèle de formage 11 réalisé lui-même en matériau translucide ou transparent. De la sorte, on réalise un éclairage de l'intérieur, et on améliore l'efficacité de la photoréticulation. Les moyens 17, 18, 19 de réticulation peuvent également comporter un miroir périphérique 19 entourant le modèle de formage 11 pour améliorer la diffusion de la lumière.

L'enceinte 14 est constituée de la platine inférieure 15 de réception du modèle de formage 11, d'une platine similaire supérieure 20 parallèle formant un couvercle, et d'un cylindre 21 interposé entre ces deux platines 15, 20 de manière hermétique au fluide. Le cylindre 21 peut être transparent afin de contrôler visuellement le déroulement du procédé de fabrication. La platine supérieure 20 supporte une pluralité de colonnettes 22 à ressorts de compression 23 régulièrement répartis à sa circonférence, pour venir appuyer contre la bordure périphérique de la membrane 9 en la coinçant contre une protubérance cylindrique 24 de la platine inférieure 15. Les colonnettes 22, les ressorts 23 et la protubérance 24 constituent ainsi des moyens de fixation amovibles de la membrane 9 de séparation des deux chambres 14a, 14b. On peut ainsi aisément changer la membrane 9 à chaque démontage de la machine, c'est à dire à chaque préparation de la fabrication d'une prothèse. La platine inférieure 15 est associée rigidement, de façon hermétique, mais de façon démontable au cylindre 21 afin de permettre le changement de la membrane 9 et/ou la préparation du modèle de formage 11, et des pièces 7 à polymériser. La source lumineuse 17 peut être constituée simplement d'une lampe électrique. La différence de pression entre les deux chambres 14a, 14b peut être réalisée par admission d'un fluide comprimé dans la chambre 14b par l'orifice et/ou par aspiration d'un fluide de la chambre 14a contenant le modèle de formage 11 à travers un orifice d'aspiration 26. Par exemple, on peut relier l'orfice d'aspiration 26 et l'orifice d'admission 25 l'un à l'autre par intermédiaire d'une pompe à fluide 16. Sous l'effet de la différence de pression ainsi réalisée, la membrane souple 9 vient se plaquer contre le modèle de formage 11 et plaque ainsi la pièce 7 de tissu préimprégné contre ce modèle de formage 11. On allume ensuite les moyens 17, 18 d'éclairage engendrant la photo-polymérisation de la matrice organique de la pièce 7 de tissu préimprégné, et la formation de la coque de support 2. Le résultat obtenu est représenté à la figure 3. Sur la figure 4, on a représenté l'exemple de la réalisation d'un dentier. Le modèle de formage 11 est alors un modèle de laboratoire pour dentier. La pièce 7 de tissu préimprégné est emprisonnée entre deux membranes 9, 10.

La membrane supérieure 9 fait fonction de membrane séparant l'enceinte 14. Son diamètre correspond donc à celui de la machine. Son épaisseur peut être comprise entre 60 et 120 µm. Elle est constituée d'un matériau synthétique élastique tel qu'un copolymère. La membrane inférieure permet de maintenir la pièce 7 de tissu préimprégné avant la mise en fonction des moyens d'aspiration 16. Elle peut également être constituée d'une membrane translucide de 20 à 40 µm d'épaisseur en copolymère.

La machine permet de réaliser une couronne dentaire prête à poser en bouche à partir d'une pièce 7 de tissu préimprégné, y compris les étapes terminales de polissage et finition avec trois couches de revêtement cosmétique en un temps approximatif de 30 minutes. Or, pour réaliser une couronne de même nature selon les techniques connues, les temps d'exécution sont d'environ 1h 15 mn pour une couronne métallique, 1h 30 mn pour une couronne de résine à armature métallique, et 2h pour une couronne en céramique à armature métallique.

## Revendications

1. Machine de fabrication d'une prothèse dentaire à coque de support composite comprenant une enceinte (14) hermétique, une platine (15) de réception d'un modèle de formage (11) dans l'enceinte (14), une membrane souple imperméable à un fluide (9), séparant l'enceinte (14) de deux chambres (14a, 14b), des moyens (17, 18, 19, 32) de réticulation des pièces (7) placées sur le modèle de formage (11), et des moyens (16, 25 26) pour créer une pression du fluide dans la chambre (14a) contenant le modèle de formage (11) moins importante que dans l'autre chambre (14b),
**caractérisée en ce que** les moyens (17, 18, 19) de réticulation sont des moyens de photo-réticulation comprenant au moins une source de lumière (17) disposée dans la chambre (14b) opposée à la chambre (14a) contenant le modèle de formage (11), et **en ce que** la membrane (9) est en matériau translucide.

2. Machine selon la revendication 1, **caractérisée en ce que** les moyens (17, 18, 19) de réticulation comprennent au moins un conduit de lumière (18) aboutissant sur la platine (15) de réception pour éclairer de l'intérieur le modèle de formage (11) réalisé en matériau translucide.

## Patentansprüche

1. Maschine zur Herstellung einer dentalen Prothese mit einer Stützschale aus Verbundwerkstoff, die enthält :
- eine hermetische Zelle (14),
- eine Platine zur Aufnahme einer Modellform (11) in der Zelle (14),
- eine flexible, für ein flüssiges oder gasförmiges Medium undurchlässige Membran (9), die die Zelle (14) in zwei Kammern (14a, 14b) trennt,
- Mittel (17, 18, 19) für die Vernetzung der Gewebestücke (7), die auf die Modellform (11) aufgebracht sind, und
- Mittel (16, 25, 26) um in der Kammer (14a), die die Modellform (11) enthält, einen Mediumdruck zu erzeugen, der niedriger als der Druck in der anderen Kammer 14b ist,
**dadurch gekennzeichnet, daß** die Vernetzungsmittel (17, 18, 19) Photovernetzungsmittel sind, die über mindestens eine Lichtquelle (17) verfügen, die in der Kammer (14b) angeordnet ist, die gegenüber der Kammer (14a), die die Modellform 11 enthält, ist, und daß die Membran (9) lichtdurchlässig ist.

2. Maschine gemäß Anspruch 1, **dadurch gekennzeichnet, daß** die Vernetzungsmittel (17, 18, 19) über mindestens einen auf die Platine 15 führenden Lichtkanal 18 zur Ausleuchtung des Inneren der Modellform (11), die aus lichtdurchlässigem Material besteht, verfügen.

## Claims

1. A machine for manufacturing a dental prosthesis with composite support shell, comprising a tight enclosure (14), a plate (15) for receiving a shaping model (11) in the enclosure (14), a flexible fluid-proof membrane (9) separating the enclosure (14) into two chambers (14a, 14b), means (17, 18, 19, 32) for cross-linking parts (7) placed on the shaping model (11), and means (16, 25, 26) for creating a lower fluid pressure in the chamber (14a) containing the shaping model (11) than in the other chamber (14b),
**characterized in that** the cross-linking means (17, 18, 19) are light-curing means comprising at least one light source (17) located in the chamber (14b) opposite the chamber (14a) containing the shaping model (11) and **in that** the membrane (9) is translucent.

2. The machine according to claim 1, **characterized in that** the cross-linking means (17, 18, 19) comprise at least one light conveying duct (18) giving out onto the receiving plate (15) to light the shaping model (11) made of translucent material from the inside.
